# EUROPEAN PATENT APPLICATION

(11) **EP 4 708 348 A1**
(43) Date of publication of application: **11.03.2026**
(21) Application number: 24936187.4
(22) Date of filing: 29.07.2024
(51) Int. Cl.: H01H 71/08

(54) **HEAT DISSIPATION BUSBAR FOR CIRCUIT BREAKER AND MANUFACTURING METHOD THEREFOR**

(30) Priority: 10.07.2024 KR 20240091172
(71) Applicant: Heat-Sol Corp., Incheon 22770 (KR)
(72) Inventor: PARK, Byung-Soo, Incheon 22733 (KR); BAIK, Sung-Shin, Incheon 22765 (KR); SHIM, Yo-Sub, Incheon 22396 (KR); LI, Jun-Feng, Incheon 22764 (KR); HONG, Ji-Un, Wonju-si Gangwon-do 26409 (KR)
(74) Representative: Petraz, Gilberto Luigi
(86) International application number: PCT/KR2024/010990
(87) International publication number: WO 2026/014579

(57) **Abstract**

The present disclosure relates generally to a heat dissipation busbar for circuit breakers and a method of manufacturing the same. More particularly, the present disclosure relates to a heat dissipation busbar for circuit breakers and a method of manufacturing the same, in which multiple heat dissipation fins are integrally formed on a busbar provided in a high- or low-voltage circuit breaker. This configuration simplifies an assembly process for installing the busbar while significantly improving heat dissipation efficiency, and by eliminating any step caused by the heat dissipation fins, minimizes a reduction in heat dissipation performance due to increased current density.

## Description

### Technical Field

The present disclosure relates generally to a heat dissipation busbar for circuit breakers and a method of manufacturing the same. More particularly, the present disclosure relates to a heat dissipation busbar for circuit breakers and a method of manufacturing the same, in which multiple heat dissipation fins are integrally formed on a busbar provided in a high- or low-voltage circuit breaker. This configuration simplifies an assembly process for installing the busbar while significantly improving heat dissipation efficiency, and by eliminating any step caused by the heat dissipation fins, minimizes a reduction in heat dissipation performance due to increased current density.

### Background Art

According to the fire statistics from 2017 to 2021 provided by the National Fire Data System of the Korean National Fire Agency, there were 47,956 electrical fires in total. Of these, 22,690 cases (47.4%) were attributed to overload/overcurrent accompanied by heat generation, unidentified short circuits, and tracking accidents.

In particular, excessive heat in an overcurrent circuit breaker (hereinafter referred to as a "circuit breaker") of a main distribution unit poses a high risk of fire accidents caused by thermal degradation when the wiring temperature rises above 120°C. Therefore, temperature management of the circuit breaker is essential.

In general, a circuit breaker is an electrical device that protects circuits and loads from damage by automatically shutting off the circuits under electrical overload or short-circuit conditions. It largely consists of a terminal unit that is connected to a power source side and a load side, an operating unit that opens or closes a stationary contact and a movable contact so as to be mechanically brought into contact with or separated from each other, a trip unit that detects overcurrent or short-circuit current on the power source side and triggers a trip operation of the operating unit, and an arc-extinguishing unit that extinguishes an arc generated when an abnormal current is interrupted.

A busbar is typically used to connect a power source side terminal and a load side terminal that constitute the terminal unit. The busbar is a metallic conductor used for conducting electrical energy and is generally made of copper or aluminum, which have low electrical resistance and excellent electrical conductivity.

To improve the performance and durability of such busbars, heat dissipation capability is essential. In relation to this, Korean Patent No. 10-1433004 discloses a heatsink busbar in which a heatsink having a concavo-convex structure is formed on an upper surface of the busbar. Additionally, Korean Patent Application Publication No. 10-2024-0020884 discloses a high-voltage, high-current busbar in which a portion of a lower plate among two overlapping plates is cut and bent upward so that an end portion thereof is exposed above the upper plate, thereby forming heat dissipation fins.

The aforementioned conventional technologies are technically characterized by improving the heat dissipation performance of the busbar through an increase in the heat dissipation area. However, the challenge is that the concavo-convex heatsink or the bent heat dissipation fins offer only a modest increase in the heat dissipation area, and therefore, the improvement in heat dissipation performance is inevitably restricted.

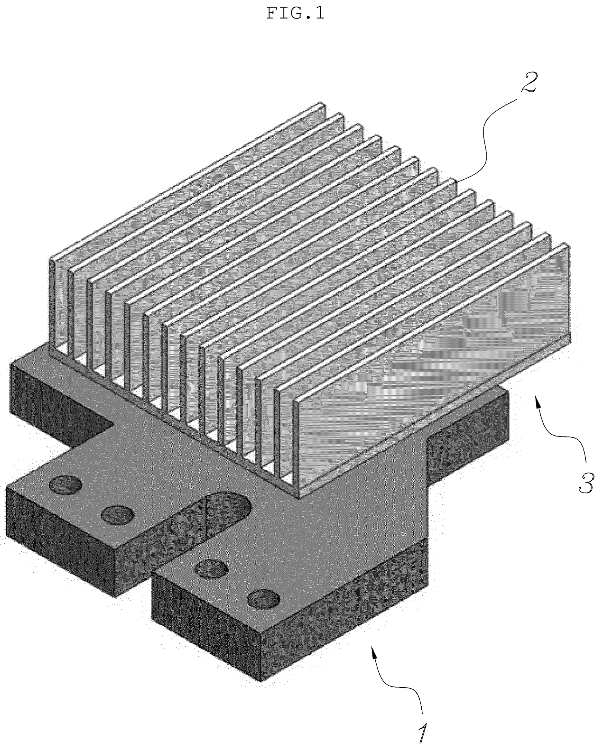

Recently, in an effort to overcome such a drawback, as illustrated in FIG. 1, a method has been proposed in which an aluminum heatsink, that is, a heatsink plate 3 provided with a plurality of heat dissipation fins 2, is bonded or fastened to a busbar 1. This increases the surface area for heat dissipation compared to the aforementioned conventional technologies. However, since aluminum has a lower thermal conductivity than copper, which is commonly used as the material for busbars, the improvement in heat dissipation efficiency is relatively small despite the increase in surface area. Furthermore, additional processing is required to attach the heatsink to the busbar, which is another drawback.

As described above, in the case of circuit breakers, excessive heat generation can cause the wiring temperature to rise above 120°C, which leads to thermal degradation and a significant increase in fire risk. Additionally, the use of an aluminum heatsink increases the volume of the heatsink to achieve a sufficient level of heat dissipation efficiency. Considering the increasing trend of higher power consumption, there is an urgent need to develop a busbar capable of exhibiting higher heat dissipation performance.

### Disclosure

### Technical Problem

Accordingly, the present disclosure has been made keeping in mind the above problems occurring in the related art, and one objective of the present disclosure is to provide a heat dissipation busbar for circuit breakers and a method of manufacturing the same, in which multiple heat dissipation fins are integrally formed on an upper surface of a copper busbar by a skiving cutting method, thereby minimizing an increase in the overall volume of the busbar while enhancing heat dissipation performance.

Additionally, another objective of the present disclosure is to provide a heat dissipation busbar for circuit breakers and a method of manufacturing the same, in which multiple heat dissipation fins are integrally formed on an upper surface of the busbar by skiving cutting, while preventing any step from being formed between a body portion and a terminal portion of the busbar. This configuration prevents a reduction in heat dissipation efficiency that may result from localized current density increase at such a step.

### Technical Solution

In order to accomplish the above objectives,
the present disclosure provides a heat dissipation busbar for circuit breakers, made of a copper material and including a body portion and a terminal portion, wherein multiple heat dissipation fins formed by machining the body portion through skiving cutting may be integrally provided on an upper surface of the body portion.

At this time, a stepped portion having a height difference is formed between the body portion and the terminal portion so that the upper surface of the body portion is higher than an upper surface of the terminal portion, and wherein the stepped portion formed between the upper surfaces of the body portion and the terminal portion may be eliminated and flattened during machining of the heat dissipation fins through the skiving cutting.

Additionally, wherein the multiple heat dissipation fins may be formed simultaneously on both the upper and lower surfaces of the body portion.

Meanwhile, the present disclosure provides a method of manufacturing a heat dissipation busbar for circuit breakers, the method including:
a busbar machining step of machining a busbar comprising a body portion and a terminal portion from a copper plate; and a heat dissipation fin forming step of forming multiple heat dissipation fins on an upper surface of the body portion of the busbar by skiving machining.

At this time, the method may further include: after the busbar machining step, a stepped portion forming step of machining an upper surface of the terminal portion to form a stepped portion having a height difference equal to or greater than a thickness of the heat dissipation fins between the body portion and the terminal portion, wherein after forming the heat dissipation fins through the skiving machining in the heat dissipation forming step, the stepped portion formed between the body portion and the terminal portion may be eliminated and flattened.

### Advantageous Effects

According to the present disclosure, by integrally forming multiple heat dissipation fins on an upper surface of a copper busbar by a skiving cutting method, it is possible to minimize an increase in the overall volume of the busbar through a simple process while significantly enhancing heat dissipation performance. Consequently, the present disclosure provides the outstanding effect of greatly reducing the risk of fire accidents caused by thermal degradation of a circuit breaker.

Additionally, according to the present disclosure, the heat dissipation fins are integrally formed on the upper surface of the busbar while preventing any step from being formed between a body portion and a terminal portion of the busbar where the heat dissipation fins are provided. This configuration additionally provides the effect of preventing a reduction in heat dissipation efficiency that may result from localized current density increase at such a step.

### Description of Drawings

FIG. 1 is a view exemplarily illustrating a heat dissipation busbar for circuit breakers according to the related art.
FIG. 2 is a view exemplarily illustrating a heat dissipation busbar for circuit breakers according to the present disclosure.
FIGS. 3 (a) and 3(b) are views illustrating a comparison in heat dissipation performance between the heat dissipation busbars for the circuit breakers illustrated in FIGS. 1 and 2.
FIG. 4 is a view illustrating another embodiment of a heat dissipation busbar for circuit breakers according to the present disclosure.
FIGS. 5(a) and 5(b) are views illustrating a comparison in heat dissipation performance between the heat dissipation busbars for the circuit breakers illustrated in FIGS. 1 and 4.
FIGS. 6(a) and 6(b) are views illustrating still another embodiment of a heat dissipation busbar for circuit breakers according to the present disclosure.
FIG. 7 is a view exemplarily illustrating a process of forming heat dissipation fins using a skiving device.
FIGS. 8 to 10 are views illustrating a jig used in the manufacture of the heat dissipation busbar according to the present disclosure illustrated in FIG. 6.
FIG. 11 is a flowchart sequentially illustrating a process of manufacturing a heat dissipation busbar for circuit breakers according to the present disclosure.

### Best Mode

Hereinafter, exemplary embodiments of a heat dissipation busbar for circuit breakers according to the present disclosure and a method of manufacturing the same will be described in detail with reference to the accompanying drawings.

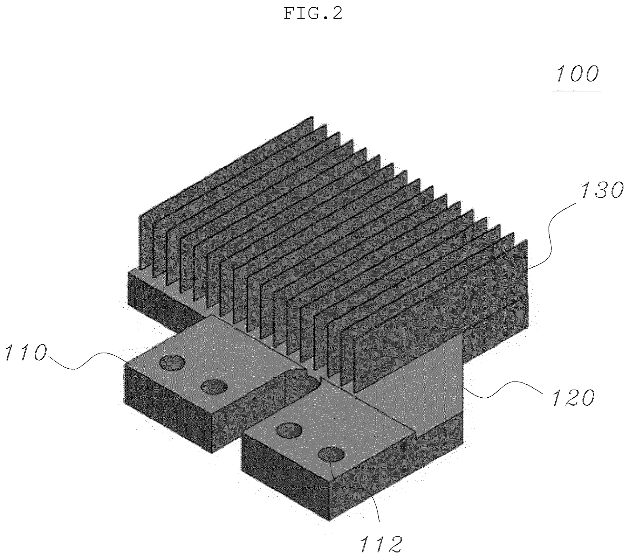

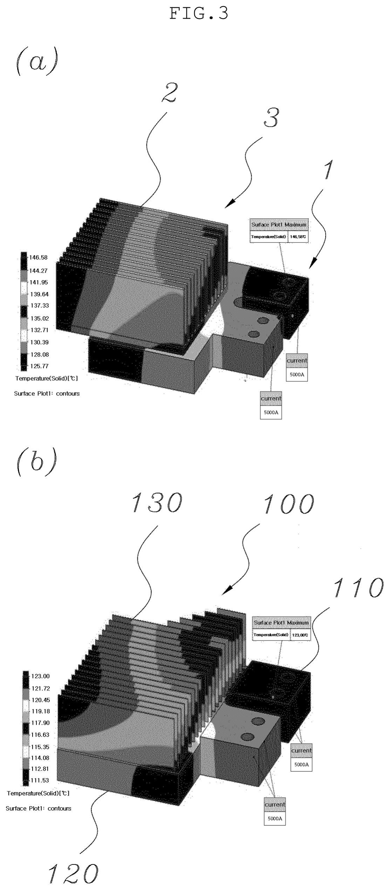

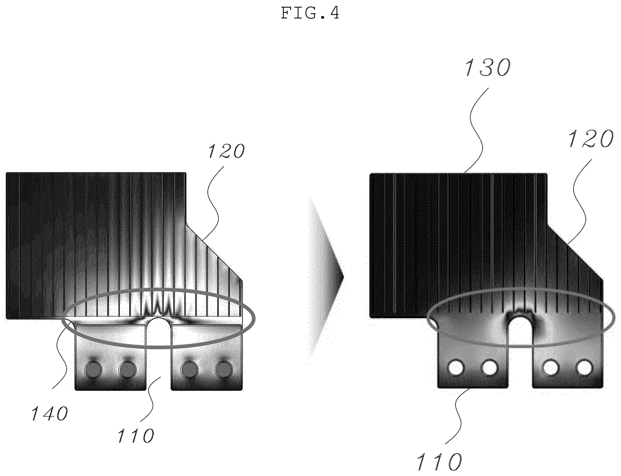

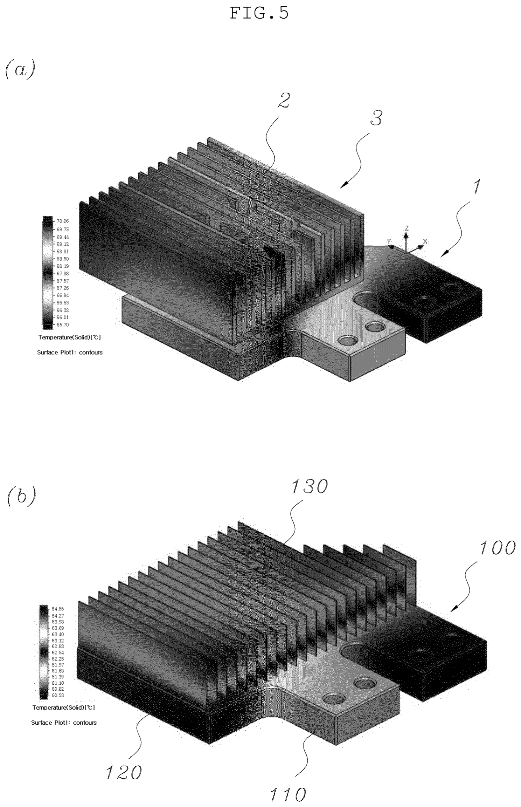

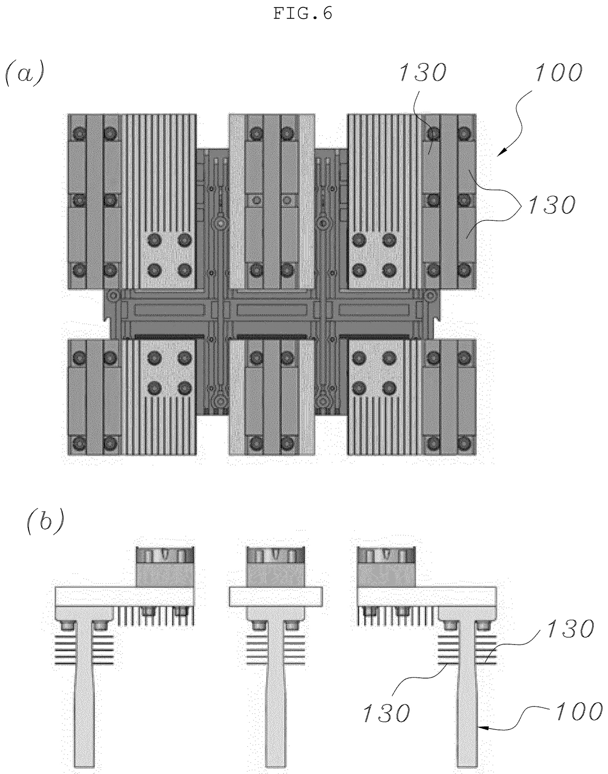

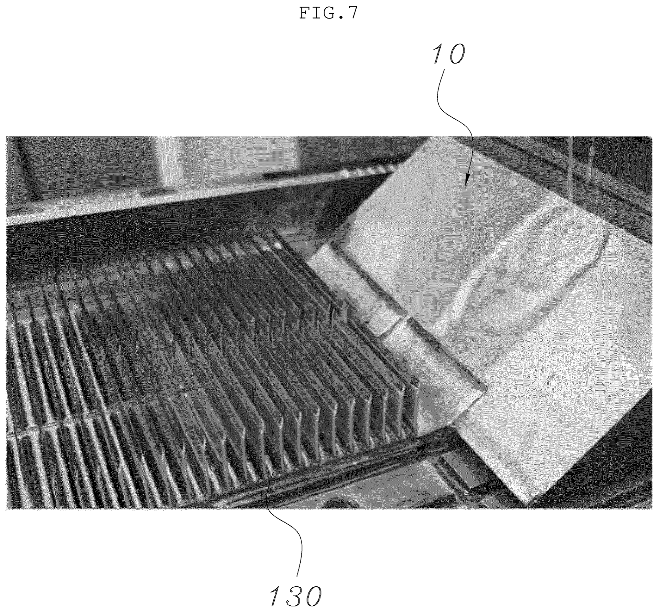

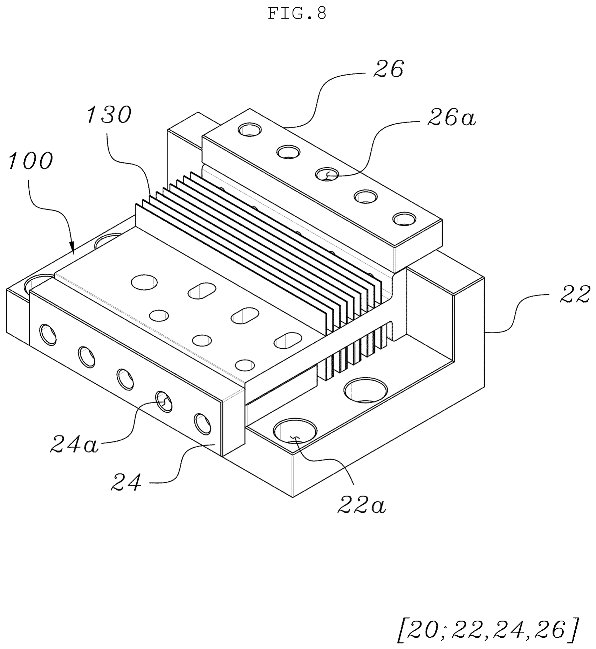

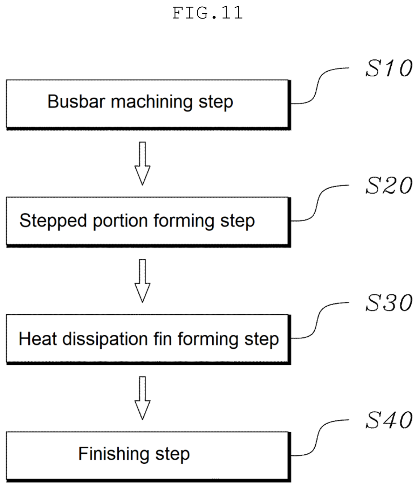

FIG. 2 is a view exemplarily illustrating a heat dissipation busbar for circuit breakers according to the present disclosure. FIGS. 3 (a) and 3(b) are views illustrating a comparison in heat dissipation performance between the heat dissipation busbars for the circuit breakers illustrated in FIGS. 1 and 2. FIG. 4 is a view illustrating another embodiment of a heat dissipation busbar for circuit breakers according to the present disclosure. FIGS. 5(a) and 5(b) are views illustrating a comparison in heat dissipation performance between the heat dissipation busbars for the circuit breakers illustrated in FIGS. 1 and 4. FIGS. 6(a) and 6(b) are views illustrating still another embodiment of a heat dissipation busbar for circuit breakers according to the present disclosure. FIG. 7 is a view exemplarily illustrating a process of forming heat dissipation fins using a skiving device. FIGS. 8 to 10 are views illustrating a jig used in the manufacture of the heat dissipation busbar according to the present disclosure illustrated in FIG. 6. FIG. 11 is a flowchart sequentially illustrating a process of manufacturing a heat dissipation busbar for circuit breakers according to the present disclosure.

The present disclosure relates to a heat dissipation busbar for circuit breakers and a method of manufacturing the same, in which multiple heat dissipation fins are integrally formed on a busbar provided in a high- or low-voltage circuit breaker, thereby simplifying an assembly process for installing the busbar while significantly enhancing heat dissipation efficiency. Furthermore, by eliminating a step caused by the heat dissipation fins, the present disclosure minimizes degradation in heat dissipation performance due to increased current density. First, a heat dissipation busbar 100 for circuit breakers according to the present disclosure (hereinafter referred to as "busbar 100") is characterized in that multiple heat dissipation fins 130 are integrally formed on an upper surface of the busbar to enhance heat dissipation efficiency.

That is, as described above, aluminum and copper are mainly used as the materials for conventional busbars. A busbar used in a circuit breaker generally serves to supply or distribute high current and includes a body portion 120 for dissipating heat and a terminal portion 110 connected to a terminal part (not illustrated) of the circuit breaker. When heat is generated in the busbar, the resistance increases, resulting in power loss. Therefore, the busbar may be made of copper, which has low electrical resistance and excellent thermal conductivity.

Additionally, in the circuit breaker, the temperature at the terminal portion where wiring is connected may rise above 120°C, which significantly increases the risk of fire due to thermal degradation. Accordingly, in recent years, a method has been employed to increase the surface area for heat dissipation by attaching or fastening a heatsink, i.e., a heat dissipation plate 3 provided with multiple heat dissipation fins 2, to the body portion 120 of the busbar. Although copper exhibits superior electrical and thermal conductivity compared to aluminum, it is heavier and more expensive than aluminum. Therefore, it is common practice to attach an aluminum heat dissipation plate 3 to a copper busbar body portion.

The present disclosure is characterized in that multiple heat dissipation fins 130 made of copper are integrally formed on the body portion 120 of the busbar 100 made of copper. This configuration allows the heat dissipation fins 130 to be formed directly on the busbar 100 without requiring a separate process for attaching the heat dissipation plate 3, thereby reducing the labor and process time required for installing the busbar 100 in the circuit breaker. Furthermore, by integrally forming the copper heat dissipation fins 130, which have excellent thermal conductivity, the present disclosure reduces the overall volume compared to the conventional aluminum heat dissipation plate 3, while also significantly improving heat dissipation performance. The heat dissipation fins 130 may be integrally formed on the busbar 100 by a skiving cutting method.

That is, as illustrated in FIG. 7, a busbar 100 made of copper may be placed on a skiving device 10, and a heat dissipation fin 130 may be formed by machining with a cutter. Through this process, a busbar 100 in which multiple heat dissipation fins 130 are integrally formed on an upper surface of a body portion 120 may be manufactured.

In this case, the heat dissipation fins 130 may have a thickness in the range of 0.5 to 1.5 mm. When the thickness of the heat dissipation fins 130 is less than 0.5 mm, there is a risk of reduced durability due to structural distortion such as thermal deformation caused by a thin profile. On the other hand, when the thickness exceeds 1.5 mm, not only the overall weight of the busbar 100 increases, but the number of heat dissipation fins 130 that can be formed decreases, potentially leading to a reduction in overall heat dissipation performance.

Additionally, the heat dissipation fins 130 may have a height in the range of 25 to 35 mm. When the height of the heat dissipation fins 130 is less than 25 mm, the effect of improving heat dissipation performance through an increase in surface area may be insignificant. On the other hand, when the height of the heat dissipation fins 130 exceeds 35 mm, although heat dissipation performance is further enhanced, the overall weight and volume of the busbar 100 increase, which makes installation within the circuit breaker difficult and raises the manufacturing cost of the busbar 100.

FIGS. 3(a) and 3(b) show a comparison of the heat dissipation performance between the conventional busbar 1, in which the aluminum heat dissipation plate 3 is attached to the copper busbar body portion, and the busbar 100 according to the present disclosure, in which the heat dissipation fins 130 are integrally formed on the copper busbar body portion 120 through skiving cutting. When a current of 5,000 A was applied to each of a pair of terminal portions, the maximum temperature of each of the busbars 1 and 100 was measured. The conventional busbar 1 exhibited a maximum temperature of 146.58°C, whereas the busbar 100 according to the present disclosure showed a significantly lower maximum temperature of 123.00°C, confirming that the heat dissipation performance was improved.

Meanwhile, according to another embodiment of a busbar 100 according to the present disclosure, as illustrated in FIG. 4, a stepped portion 140 may be formed between a body portion 120 and a terminal portion 110. That is, the stepped portion 140 may be formed so that the height of the body portion 120 is greater than that of the terminal portion 110. The protruding part of the body portion 120 created by the stepped portion 140 may be utilized to form heat dissipation fins 130.

That is, when upper surfaces of the body portion 120 and the terminal portion 110 constituting the busbar 100 are originally on the same plane and the upper surface of the body portion 120 is machined to form the heat dissipation fins 130, a step, i.e., a height difference, inevitably arises between the body portion 120 and the terminal portion 110. When such a step is formed between the body portion 120 and the terminal portion 110, as illustrated in FIG. 4, a higher current density is concentrated locally at the step, known as a current concentration phenomenon. This results in a temperature rise, potentially leading to a reduction in overall heat dissipation performance.

Accordingly, by forming the stepped portion 140 between the body portion 120 and the terminal portion 110 of the busbar 100 so that the upper surface of the body portion 120 before forming the heat dissipation fins 130 is higher than the upper surface of the terminal portion 110, and then forming the heat dissipation fins 130 on the body portion 120 through skiving cutting, the stepped portion 140 may be eliminated. Consequently, the current concentration phenomenon caused by the step between the upper surfaces of the body portion 120 and the terminal portion 110 may be resolved.

At this time, the height of the stepped portion 140 formed between the body portion 120 and the terminal portion 110 may vary depending on the thickness and number of the heat dissipation fins 130. The height may be set to be at least equal to the thickness of the heat dissipation fins 130 so that, after machining the heat dissipation fins 130, no step is formed between the upper surfaces of the body portion 120 and the terminal portion 110.

That is, the height of the stepped portion 140 may be set by adding a predetermined allowance to a thickness required for forming the heat dissipation fins 130 through skiving machining. After machining the heat dissipation fins 130, when a height difference remains between the body portion 120 and the terminal portion 110, or when a thickness tolerance of the busbar 100 is not satisfied, additional machining of the body portion 120 or the terminal portion 110 may be performed to eliminate the height difference or to meet the thickness tolerance.

FIGS. 5(a) and 5(b) show a comparison of the heat dissipation performance between the conventional busbar 1, in which the aluminum heat dissipation plate 3 is attached to the copper busbar body portion, and the busbar 100 according to the present disclosure, in which the heat dissipation fins 130 are integrally formed on the copper busbar body portion 120 through skiving cutting so that no step is formed between the body portion 120 and the terminal portion 110. In the conventional busbar 1, the thickness and height of the heat dissipation fins 2 were 4 mm and 45 mm, respectively, whereas in the busbar 100 according to the present disclosure, the thickness and height of the heat dissipation fins 130 were 0.5 mm and 30 mm, respectively.

The ambient temperature was set to 25°C, and tests were conducted with input and output currents of 4,000A each. As a result, the conventional busbar 1 exhibited a temperature difference ΔT of 49.29°C before and after current supply, whereas the busbar 100 according to the present disclosure showed a temperature difference ΔT of 39.55°C. This confirms that the heat dissipation performance was improved by more than 20 %.

Meanwhile, the overall shape of the busbar 100 according to the present disclosure may vary depending on the type of circuit breaker in which the busbar 100 is to be installed, i.e., the level of operating voltage (high or low voltage), the level of rated current or whether it is AC or DC (alternating or direct current), or the like. For example, in an air circuit breaker (ACB) with 2,000A or higher, or in a large-capacity circuit breaker, as illustrated in FIGS. 6(a) and 6(b), multiple heat dissipation fins 130 may be formed simultaneously on both upper and lower surfaces of a body portion 120 of a busbar 100 to enhance heat dissipation performance.

In this case, when the heat dissipation fins 130 are simultaneously formed on both the upper and lower surfaces of the body portion 120 as described above, stepped portions 140 formed between the body portion 120 and the terminal portion 110 may be present on both upper and lower surfaces of the busbar 100. The protruding parts of the body portion 120 created by the stepped portions 140 may be used for machining the heat dissipation fins 130. After forming the heat dissipation fins 130 on both the upper and lower surfaces of the body portion 120, the stepped portions 140 on the upper and lower surfaces of the busbar 100 may be all eliminated, allowing the upper and lower surfaces between the body portion 120 and the terminal portion 110 to lie on the same plane.

Next, a method of manufacturing a busbar 100 according to the present disclosure relates to a method for the manufacture of the aforementioned busbar 100. As illustrated in FIG. 11, the manufacturing method may include a busbar machining step S10, a heat dissipation fin forming step S30, and a finishing step S40.

First, the busbar machining step S10 is a process for machining a busbar 100 including a body portion 120 and a terminal portion 110 from a copper plate. The overall shape of the busbar 100 may vary depending on the type of circuit breaker in which the busbar 100 is to be installed.

At this time, a terminal coupling hole 112 for connection to a circuit breaker may be formed in the terminal portion 110. Since various methods for machining a busbar 100 from a copper plate, i.e., methods for manufacturing a copper busbar according to the type of circuit breaker, are already well known, a detailed description thereof will be omitted.

Next, the heat dissipation fin forming step S30 is a process for integrally forming multiple heat dissipation fins 130 on an upper surface of the body portion 120 of the busbar 100 machined in the busbar machining step S10. As illustrated in FIG. 7, multiple heat dissipation fins 130 may be integrally formed on the upper surface or both the upper and lower surfaces of the body portion 120 through skiving cutting using a skiving device 10.

At this time, the thickness and height of the heat dissipation fins 130 may be formed, as described above, in the ranges of 0.5 to 1.5mm and 25 to 35mm, respectively.

Meanwhile, the method of manufacturing the busbar 100 according to the present disclosure may further include a stepped portion forming step S20. The stepped portion forming step S20 may be performed between the busbar machining step S10 and the heat dissipation fin forming step S30.

The stepped portion forming step S20 is a process for forming a stepped portion 140 between the terminal portion 110 and the body portion 120 of the machined busbar 100 so that the upper surface of the body portion 120 protrudes above an upper surface of the terminal portion 110. For example, among the upper surfaces of the terminal portion 110 and the body portion 120, which are originally on the same plane, the upper surface of the terminal portion 110 may be machined so that a stepped portion 140 having a height difference equal to or greater than the thickness of the heat dissipation fins 130 is formed between the upper surfaces of the body portion 120 and the terminal portion 110.

As described above, the stepped portion 140 is provided to prevent a height difference, i.e., a step, from being formed between the body portion 120 and the terminal portion 110 after the machining of the heat dissipation fins 130 in the heat dissipation fin forming step S30. Since the protruding part of the body portion 120 created by the stepped portion 140 is used for machining the heat dissipation fins 130 with the skiving device 10 during the heat dissipation fin forming step S30, once the heat dissipation fin forming step S30 is completed, the stepped portion 140 may be eliminated, and the upper surfaces of the terminal portion 110 and the body portion 120 may again lie on the same plane.

In this case, when the heat dissipation fins 130 are formed on both the upper and lower surfaces of the body portion 120, the stepped portion forming step S20 may involve machining both the upper and lower surfaces of the terminal portion 110 so that a stepped portion 140 is also formed between the lower surface of the body portion 120 and the lower surface of the terminal portion 110.

Additionally, in the heat dissipation fin forming step S30, the heat dissipation fins 130 may be formed on both the upper and lower surfaces of the body portion 120 in the following manner. First, multiple heat dissipation fins 130 may be formed on either the upper or lower surface of the body portion 120 using the skiving device 10. Then, with the busbar 100 inverted so that the previously formed heat dissipation fins 130 face downward, additional multiple heat dissipation fins 130 may be formed on the opposite lower or upper surface of the body portion 120.

In this case, when the heat dissipation fins 130 are primarily machined on the upper surface of the body portion 120 and then the additional heat dissipation fins 130 are secondarily machined on the lower surface of the body portion 120, a base of the skiving device 10, which supports the upper surface of the body portion 120, i.e., the surface opposite to the one used for machining the heat dissipation fins 130, may be provided with multiple slits (not illustrated) for passing the heat dissipation fins 130 formed on the upper surface of the body portion 120 by the primary machining. This configuration allows the primarily machined heat dissipation fins 130 to be inserted into the slits while the upper surface of the body portion 120 is supported by the base. Furthermore, support means may be provided on opposite side surfaces of the base in a retractable manner to support opposite side surfaces of the body portion 120. This configuration minimizes the load transmitted to the previously formed heat dissipation fins 130 inserted into the slits during the formation of the additional heat dissipation fins 130 on the lower surface of the body portion 120.

Meanwhile, when the heat dissipation fins 130 are primarily machined on the upper surface of the body portion 120 and then the additional heat dissipation fins 130 are secondarily machined on the lower surface of the body portion 120, a separate fixing jig 20 may be used to secure the busbar 100 to the skiving device 10. As illustrated in FIG. 8, the fixing jig 20 may include a jig body 22, a front support member 24, and an upper support member 26.

More specifically, the jig body 22 may be fixedly installed on the base of the skiving device 10 and it serves to support the busbar 100 having the heat dissipation fins 130 machined on the upper surface of the body portion 120. The jig body 22 may have a rear end bent upward in a " 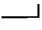 " shape so that the protruding part at the rear end supports a rear end of the busbar 100.

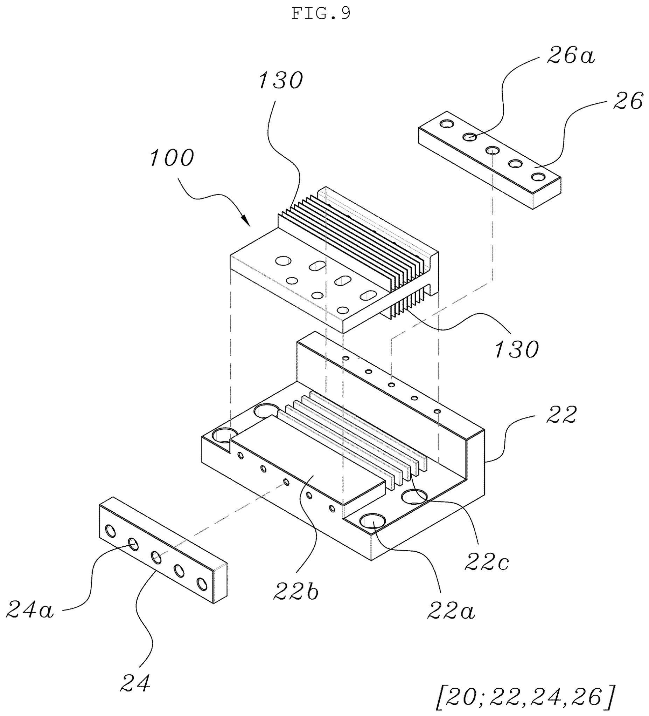

At this time, as illustrated in FIG. 9, multiple heat dissipation fin support portions 22c may be formed protrudingly on an upper surface of the jig body 22. The width, i.e., the thickness, of the heat dissipation fin support portions 22c may be formed to correspond to the spacing between the heat dissipation fins 130. This configuration allows opposing surfaces of neighboring heat dissipation fins 130 to be in contact with front and rear surfaces of the heat dissipation fin support portions 22c, thereby allowing the fins to be supported by the heat dissipation fin support portions 22c.

Additionally, the height of the heat dissipation fin support portions 22c may be formed to be equal to or greater than that of the heat dissipation fins 130 so that the heat dissipation fins 130 are fully supported, including lower ends, by the heat dissipation fin support portions 22c.

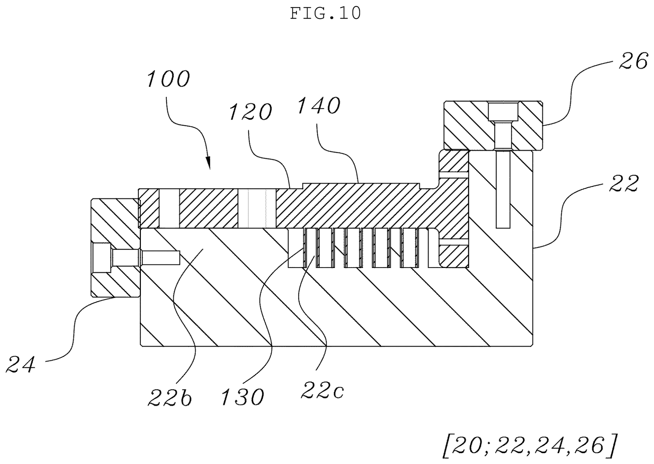

That is, as illustrated in FIG. 10, the busbar 100 having the heat dissipation fins 130 machined on the upper surface of the body portion 120 may be placed invertedly on the upper surface of the jig body 22, with the finned upper surface facing downward. The heat dissipation fins 130 may be supported by being fitted to the outside of the heat dissipation fin support portions 22c, while the parts of the body portion 120 without the heat dissipation fins 130 may be rested and supported on an upper surface of a seating portion 22b protruding in front of the heat dissipation fin support portions 22c.

At this time, upper ends of the heat dissipation fin support portions 22c and the seating portion 22b may be formed at the same height, allowing the body portion 120 of the busbar 100 to be supported horizontally across the jig body 22. This configuration minimizes an impact on the heat dissipation fins 130 supported by the heat dissipation fin support portions 22c during machining on the lower surface of the body portion 120, while also reducing the risk of errors occurring during the machining of the heat dissipation fins 130 on the lower surface of the body portion 120.

Additionally, at least one through-hole 22a may be formed in the jig body 22 to allow the jig body 22 to be fixedly installed on the base of the skiving device 10 using fastening means such as bolts. Through-holes 24a and 26a for coupling with the jig body 22 using fastening means may also be formed in the front support member 24 and the upper support member 26, which will be described later.

Next, the front support member 24 may be coupled to a front surface of the jig body 22 in which the busbar 100 having the heat dissipation fins 130 machined on the upper surface of the body portion 120 is installed in an inverted state, i.e., with the finned upper surface facing downward. The front support member serves to support a front end of the busbar 100.

At this time, a lower part of the front support member 24 may be securely fastened to the front surface of the jig body 22 using a fastening means through the through-hole 24a, and an upper part of the front support member 24 may protrude above the jig body 22 to support the front end of the busbar 100.

That is, a rear end of the busbar 100 may be supported by the rear end of the jig body 22 bent upward, while the front end of the busbar 100 may be supported by the front support member 24. This configuration allows the busbar 100 to be fixed in position so that it does not move or shift in the front-to-rear direction during the machining of the heat dissipation fins 130 on the lower surface of the body portion 120.

Next, the upper support member 26 may be similarly coupled vertically to a rear upper end of the jig body 22 in which the busbar 100 is installed, and it serves to support a rear upper end of the busbar 100.

That is, the upper support member 26 may be securely fastened to the rear upper end of the jig body 22 using a fastening means through the through-hole 26a, and a front end of the upper support member 26 may protrude forward from the rear upper end of the jig body 22 to support the rear upper end of the busbar 100. This configuration allows the busbar 100 to be fixed in position so that it does not move or shift in the up-to-down direction during the machining of the heat dissipation fins 130 on the lower surface of the body portion 120.

Therefore, when the jig body 22 is fixedly installed on the base of the skiving device 10 and as illustrated in FIG. 10, the busbar 100, which has the heat dissipation fins 130 already machined on the upper surface of the body portion 120, is placed on the jig body 22 in an inverted state in which the stepped portion 140 on the lower surface of the body portion 120 faces upward, the front support member 24 and the upper support member 26 may be coupled to the jig body 22 to fix the busbar 100 in position without any front-to-rear or up-to-down movement. Thereafter, the stepped portion 140 on the lower surface of the body portion 120 may be machined using the skiving device 10. This process allows for the manufacture of the busbar 100 with the heat dissipation fins 130 formed on both the upper and lower surfaces thereof, as illustrated in FIG. 8.

Next, the finishing step S40 is a final inspection process performed before shipment of the busbar 100 after completion of the machining of the heat dissipation fins 130, in which the busbar is examined for defects and, when any abnormalities are found, additional machining is carried out. This step may include a process for cleaning and drying the machined busbar 100, a process for checking for the presence of any step between the upper surfaces of the body portion 120 and the terminal portion 110 and then performing additional machining when a step is detected, or a process for verifying dimensional accuracy according to the type of circuit breaker in which the busbar is to be installed.

Accordingly, the busbar 100 and the method of manufacturing the same according to the present disclosure as described above offer several advantages. By integrally forming the multiple heat dissipation fins 130 on the upper surface of the copper busbar 100 using a skiving cutting method, the heat dissipation performance may be enhanced through a simplified process while minimizing an increase in the overall volume of the busbar 100. As a result, it is possible to significantly reduce the risk of fire accidents caused by thermal degradation of the circuit breaker. Furthermore, since the heat dissipation fins 130 are integrally formed on the busbar 100 without resulting in a step to be formed between the body portion 120 and the terminal portion 110, it is possible to prevent a reduction in heat dissipation efficiency due to localized current density increase at such a step.

Although the preferred embodiments of the present disclosure have been described, the present disclosure is not limited to the above embodiments. It will be apparent to those skilled in the art that various modifications and changes can be made without departing from the technical spirit and scope of the present disclosure.

## Claims

1. A heat dissipation busbar for circuit breakers, made of a copper material and comprising a body portion and a terminal portion,
wherein multiple heat dissipation fins formed by machining the body portion through skiving cutting are integrally provided on an upper surface of the body portion.

2. The heat dissipation busbar of claim 1, wherein a stepped portion having a height difference is formed between the body portion and the terminal portion so that the upper surface of the body portion is higher than an upper surface of the terminal portion, and
wherein the stepped portion formed between the upper surfaces of the body portion and the terminal portion is eliminated and flattened during machining of the heat dissipation fins through the skiving cutting.

3. The heat dissipation busbar of claim 1, wherein the multiple heat dissipation fins are formed simultaneously on both the upper and lower surfaces of the body portion.

4. A method of manufacturing a heat dissipation busbar for circuit breakers, the method comprising:
a busbar machining step of machining a busbar comprising a body portion and a terminal portion from a copper plate; and
a heat dissipation fin forming step of forming multiple heat dissipation fins on an upper surface of the body portion of the busbar by skiving machining.

5. The method of claim 4, further comprising:
after the busbar machining step, a stepped portion forming step of machining an upper surface of the terminal portion to form a stepped portion having a height difference equal to or greater than a thickness of the heat dissipation fins between the body portion and the terminal portion,
wherein after forming the heat dissipation fins through the skiving machining in the heat dissipation forming step, the stepped portion formed between the body portion and the terminal portion is eliminated and flattened.
